# EUROPEAN PATENT SPECIFICATION

(11) **EP 2 142 693 B1**
(45) Date of publication and mention of the grant of the patent: **18.12.2013**
(21) Application number: 08743386.8
(22) Date of filing: 28.04.2008
(51) Int. Cl.: D04H 1/46

(54) **NEEDLEPUNCHED NANOWEB STRUCTURES**
DURCHSTOCHENE NANOFASERBAHNSTRUKTUREN
STRUCTURES DE NANOTOILE AIGUILLETÉE

(30) Priority: 02.05.2007 US 799620
(43) Date of publication of application: 13.01.2010
(73) Proprietor: E. I. Du Pont de Nemours and Company, Wilmington, DE 19898 (US)
(72) Inventor: SIMMONDS, Glen, E., Avondale, Pennsylvania 19311 (US); KOHLI, Anil, Midlothian, Virginia 23113 (US)
(74) Representative: Matthews, Derek Peter
(86) International application number: PCT/US2008/005482
(87) International publication number: WO 2008/136963

(56) References cited:
- EP-A- 1 813 167
- WO-A-2006/032706
- JP-A- 8 172 946
- JP-A- 2005 043 779
- JP-A- 2007 002 350
- US-B1- 6 733 861

## Description

### Field Of The Invention

This invention is related to the field of nanoweb structures and in particular nanowebs bonded to substrates by needlepunching.

### Background

"Nanowebs" are nonwoven webs comprising primarily, or even exclusively, fibers that have a number average diameter of less than one micrometer. Due to their extremely small pore dimensions and high surface area to volume ratio, nanowebs have been expected to be utilized as substrates for many applications such as, for example, hot gas filtration, high performance air filtration, waste water filtration, filtration membranes for biological contaminants, separators for batteries and other energy storage devices. However, one disadvantage of nanowebs for these applications is their poor mechanical integrity.

The number average diameter of nanofibers are less than 1000 nm and sometimes as small as 20 nm. In this dimension, even if they are layered and formed as thick membranes, the mechanical strength of the resulting structures is not sufficient to withstand macroscopic impacts for filtration applications such as normal liquid or gas flows passing through them or higher strength required for winding and handling during end use manufacturing steps. Nanowebs made, for example, by electrospinning or electroblowing also tend to have low solids volume content (solidity), typically less than about 20%.

Unsupported nanowebs also exhibit an excessive reduction in width ("necking") when tension is applied in the machine direction (MD), such as when winding or post processing, for example, when applying surface treatments and laminating for some product applications. Where the material is unwound and wound again, varying tensions can result in different widths and potentially create variations in sheet properties. A material is desired which is more robust with regard to applied tension. Such a material can be obtained by bonding the nanoweb to a supporting web or scrim.

Needlepunching is a form of mechanical bonding of fibers which have normally been produced by a card or other equipment. The process converts the web of loose fibers into a coherent nonwoven fabric using a needle loom. Needle looms of various types are well known in the art and function to bond a nonwoven web by mechanically orienting fibers through the web. The process is called needling, or needlepunching. Barbed needles, set into a board, punch fiber into the batt and withdraw, leaving the fibers entangled. The needles are spaced in a nonaligned arrangement. By varying the strokes per minute, the number of needles per loom, the advance rate of the batt, the degree of penetration of the needles, and the weight of the batt, a wide range of fabric densities can be made. The needle loom can be operated to produce patterned or unpatterned products.

It is known in the art that needlepunching generally increases the air permeability of a nonwoven web. However, it is possible to use needlepunching to reduce the permeability of a nonwoven web under certain conditions. According to literature published by Foster Needle Co. on their website "Lower permeability is more difficult to achieve than higher permeability". The key to lower permeability in a fabric, is to "close" the felt up as much as possible. The more the felt is "closed" (in other words, needled tightly and as densely as possible) the lower the permeability. Using this logic a person skilled in the art would expect a large amount of needle penetrations per square inch in order to just maintain the small pore structure of a web comprised of fibers with diameters of less than 1 micron.

### SUMMARY OF THE INVENTION

A first embodiment of the present invention is a composite sheet comprising a first web of polymer fibers having a fiber diameter less than or equal to one micron bonded to a second web of fibers having a fiber diameter greater than one micron, wherein some of the fibers of the second web protrude through and beyond the surface of the first web of polymer fibers at a multiplicity of discontinuous regions.

Another embodiment of the present invention is a process for bonding a polymeric nanoweb to a felt to form a composite sheet, the process comprising providing the nanoweb and the felt in a face-to-face relationship and needlepunching the felt to the nanoweb, such that some fibers from the felt protrude through and beyond the surface of the nanoweb.

The composite sheets of the current invention may be useful for many filtration applications, such as, but not limited to, bag house filters, vacuum cleaner filters, air purification filters and other gas or liquid filtration applications.

### DETAILED DESCRIPTION

The term "nonwoven" means a web including a multitude of randomly distributed fibers. The fibers generally can be bonded to each other or can be unbonded. The fibers can be staple fibers or continuous fibers. The fibers can comprise a single material or a multitude of materials, either as a combination of different fibers or as a combination of similar fibers each comprised of different materials.

"Calendering" is the process of passing a web through a nip between two rolls. The rolls may be in contact with each other, or there may be a fixed or variable gap between the roll surfaces. An "unpatterned" roll is one which has a smooth surface within the capability of the process used to manufacture them. There are no points or patterns to deliberately produce a pattern on the web as it passed through the nip, unlike a point bonding roll.

A "scrim" is a support layer and can be any planar structure with which the nanoweb can be bonded, adhered or laminated. Advantageously, the scrim layers useful in the present invention are spunbond nonwoven layers, but can be made from carded webs of nonwoven fibers and the like. Scrim layers useful for some filter applications require sufficient stiffness to hold pleats and dead folds.

The term "nanofiber" as used herein refers to fibers having a number average diameter or cross-section less than about 1000 nm, even less than about 800 nm, even between about 50 nm and 500 nm, and even between about 100 and 400 nm. The term diameter as used herein includes the greatest cross-section of non-round shapes. A nanoweb is defined as a web of fibers wherein the number average fiber diameter is less than 1 micron.

An as-spun nanoweb typically comprises primarily or exclusively nanofibers that are produced by electrospinning, such as classical electrospinning or electroblowing, and in certain circumstances, by meltblowing processes. Classical electrospinning is a technique illustrated in U.S. Patent No. 4,127,706, wherein a high voltage is applied to a polymer in solution to create nanofibers and nonwoven mats. However, total throughput in electrospinning processes is too low to be commercially viable in forming heavier basis weight webs.

The "electroblowing" process is disclosed in World Patent Publication No. WO 03/080905. A stream of polymeric solution comprising a polymer and a solvent is fed from a storage tank to a series of spinning nozzles within a spinneret, to which a high voltage is applied and through which the polymeric solution is discharged. Meanwhile, compressed air that is optionally heated is issued from air nozzles disposed in the sides of, or at the periphery of the spinning nozzle. The air is directed generally downward as a blowing gas stream which envelopes and forwards the newly issued polymeric solution and aids in the formation of the fibrous web, which is collected on a grounded porous collection belt above a vacuum chamber. The electroblowing process permits formation of commercial sizes and quantities of nanowebs at basis weights in excess of about 1 gsm, even as high as about 40 gsm or greater, in a relatively short time period.

Handling of nanowebs is extremely difficult due to their fragility. For this reason, it is sometimes advantageous to deposit the nanoweb directly onto a scrim to ease the handling of the nanoweb. Accordingly, the composite sheet of the present invention can further include a scrim upon which the nanoweb is supported prior to needlepunching with a felt or support scrim. The scrim can be arranged on the collector to collect and combine the nanofiber web spun on the scrim.

Examples of the scrim may include various nonwoven cloths, such as meltblown nonwoven cloth, needle-punched or spunlaced nonwoven cloth, woven cloth, knitted cloth, paper and the like, and can be used without limitations so long as a nanofiber layer can be added on the scrim.

Polymer materials that can be used in forming the nanowebs of the invention are not particularly limited and include both addition polymer and condensation polymer materials such as, polyacetal, polyamide, polyester, cellulose ether and ester, polyalkylene sulfide, polyarylene oxide, polysulfone, modified polysulfone polymers and mixtures thereof. Preferred materials that fall within these generic classes include, poly (vinylchloride), polymethylmethacrylate (and other acrylic resins), polystyrene, and copolymers thereof (including ABA type block copolymers), poly (vinylidene fluoride), poly (vinylidene chloride), polyvinylalcohol in various degrees of hydrolysis (87% to 99.5%) in crosslinked and non-crosslinked forms. Preferred addition polymers tend to be glassy (a T_{g} greater than room temperature). This is the case for polyvinylchloride and polymethylmethacrylate, polystyrene polymer compositions or alloys or low in crystallinity for polyvinylidene fluoride and polyvinylalcohol materials. One preferred class of polyamide condensation polymers are nylon materials, such as nylon-6, nylon-6,6, nylon 6,6-6,10 and the like. When the polymer nanowebs of the invention are formed by meltblowing, any thermoplastic polymer capable of being meltblown into nanofibers can be used, including polyolefins, such as polyethylene, polypropylene and polybutylene, polyesters such as poly (ethylene terephthalate) and polyamides, such as the nylon polymers listed above.

It can be advantageous to add known-in-the-art plasticizers to the various polymers described above, in order to reduce the T_{g} of the fiber polymer. Suitable plasticizers will depend upon the polymer to be electrospun or electroblown, as well as upon the particular end use into which the nanoweb will be introduced. For example, nylon polymers can be plasticized with water or even residual solvent remaining from the electrospinning or electroblowing process. Other known-in-the-art plasticizers which can be useful in lowering polymer T_{g} include, but are not limited to aliphatic glycols, aromatic sulphanomides, phthalate esters, including but not limited to those selected from the group consisting of dibutyl phthalate, dihexl phthalate, dicyclohexyl phthalate, dioctyl phthalate, diisodecyl phthalate, diundecyl phthalate, didodecanyl phthalate, and diphenyl phthalate, and the like. The Handbook of Plasticizers, edited by George Wypych, 2004 Chemtec Publishing, incorporated herein by reference, discloses other polymer/plasticizer combinations which can be used in the present invention.

The as-spun nanoweb (and scrim) can be calendered prior to the needling process, in order to impart desired improvements in physical properties. In one embodiment of the invention the as-spun nanoweb is fed into the nip between two unpatterned rolls in which one roll is an unpatterned soft roll and one roll is an unpatterned hard roll, and the temperature of the hard roll is maintained at a temperature that is between the T_{g}, herein defined as the temperature at which the polymer undergoes a transition from glassy to rubbery state, and the Tₒₘ, herein defined as the temperature of the onset of melting of the polymer, such that the nanofibers of the nanoweb are at a plasticized state when passing through the calendar nip. Further, the nonwoven web can be stretched, optionally while being heated to a temperature that is between the T_{g} and the lowest Tₒₘ of the nanofiber polymer. The stretching can take place either before and/or after the web is fed to the calender rolls, and in either or both of the MD or CD.

In the needlepunching process of the invention, the diameter of the needles used in the needlepunching operation is at least 500 times the average diameter of the nanofibers of the nanowebs, and preferably at least 1000 times the average diameter of the nanofibers.

According to the present process, rather than the intermingling of coarse and fine fibers that is typical of prior art needled fiber structures, the coarse fibers are preferentially pushed through the nanoweb structure as though it were a solid sheet being perforated by the needles. The coarse fibers remain anchored in the coarse fiber web while having a portion of their length pushed through the nanoweb, such that they protrude beyond the surface of the nanoweb. The coarse fibers act to fill the holes left in the nanoweb by the needles, thereby reducing the impact of the needling on the pore structure of the fine fiber web. In this manner, the mean pore size of the bonded, composite sheet can be equal to or less than the mean pore size of the nanoweb and the coarse fiber web before needlepunching.

- The amount of needling is not limited in the current invention. As in other needling operations, however, numerous factors must be optimized to provide the desired pore structure and amount of bonding between the nanoweb and the coarse fiber web. Those factors include the size and type of the needles, the amount of needling, the depth of needling, selection of appropriate coarse fibers in terms of fiber type, length, denier and web density.

The process of the present invention can further include heat treating of the composite sheet after needlepunching, such as by hot roll calendering or heating in an oven.

### EXAMPLES

### Example 1

A 24% solution of polyamide-6,6 in formic acid was spun by electroblowing as described in WO 03/080905 into a nanoweb. The number average fiber diameter was about 422 nm. Nominal basis weight of the nanoweb was 28.5 grams per square meter (gsm), and thickness was 60 microns.

Four layers of a backing material made of 80% Kevlar® fibers and 20% polyester fibers, with a basis weight of approximately 2 oz per square yard (70 gsm), were needled using a hand needle loom to the polyamide nanoweb at various levels of penetrations per square inch. Needles in the loom were 38 gauge (0.5mm diameter) which is approximately 1185 times the average fiber diameter of the nanoweb. Measurements were then made of the pore structures using standard capillary flow porometry instruments manufactured by PMI (Porous Materials incorporated)

Optional calendering was carried out by delivering the hand sheet laminate samples to a two steel roll calender nip. The calender was set to a gap of 0.045 inches (1.15 mm), a nip pressure of 850 pounds per linear inch (150 kg/cm) and was operated at room temperature.

**TABLE 1**

| Sample | Material Construction | Extent of Needling | Minimum Pore Diameter, microns | Maximum Pore Diameter, Microns | Mean Flow Pore Diameter, microns |
|---|---|---|---|---|---|
| A | Single backing layer | none | 4.321 | 246.5 | 46.5 |
| B | 4 layers of backing | 800 ppsi (125 p/cm²) | 1.3794 | 455.0 | 29.0 |
| C | 4 layers backing + nanoweb | none | 0.7708 | 14.5 | 5.9 |
| D | 4 layers backing + nanoweb | 200 ppsi (30 p/cm²) | 0.6617 | 216.9 | 5.3 |
| E | 4 layers backing + nanoweb | 800 ppsi calendered. | 0.957 | 110.8 | 15.4 |

It can be seen from Samples A and B, that the mean flow pore diameters of the materials made only from the coarser fibers are well above the diameters required to meet the conditions for the small pore layers of the desired composite sheet material. Simply stacking the coarse and fine fiber materials without needling (Sample C) establishes the pore structure contributed by the fine fiber material. Sample D illustrates that despite needling, the mean flow pore diameter of the unbonded composite can be essentially sustained. Note, however, that the maximum pore diameter is increased, although not to the extent that is found without the fine fiber material. Sample E illustrates that with additional needling, the mean flow pore diameter begins to increase. However, calendering of the material successfully limits the maximum pore diameter.

Example 1 illustrates that, contrary to expectations, needles sized for the coarse fiber material may be used to laminate a nanoweb to one or more webs of coarser fibers without negatively impacting the pore structure of the nanoweb and without requiring a dense amount of needling to close up the felt.

### Example 2

Nanoweb with a basis weight of 10 gsm was spun from polyamide-6,6 using the process of World Patent Publication No. WO 03/080905 onto a 33.9 gsm polyester spun lace (Sontara®, Du Pont, Wilmington, DE). Mean fiber diameter was 400 nm. The nanoweb was bonded to a 14 oz (0.4 kg) polyester partially consolidated felt (Southern Felt) by needlepunching.

Needlepunching entailed bringing the felt and the scrim + nanoweb structure together with the nanoweb on the inside against the felt and needlepunching from the felt side. Line speed was 1.5 meter/min. The number of penetrations per inch (PPI) was 383. The air permeability of the laminate was 32 cubic feet per minute (cfm) (0.9 m³/minute).

### Example 3

Nanoweb with a basis weight of 5 gsm was spun from polyamide-6,6 using the process of World Patent Publication No. WO 03/080905 onto a 33.9 gsm polyester spun lace (Sontara®). Mean fiber diameter was 400 nm. The nanoweb was bonded to a 14 oz (0.4 kg) partially consolidated polyester felt (Southern Felt) by needlepunching.

Needlepunching entailed bringing the felt and the scrim + nanoweb structure together with the nanoweb on the inside against the felt and needlepunching from the felt side. Line speed was 1.5 meter/min. The number of penetrations per inch (PPI) was 383. The air permeability of the laminate was 37 cubic feet per minute (cfm) (1.05 m³/minute).

### Example 4

Nanoweb with a basis weight of 10 gsm was spun from polyamide-6,6 using the process of World Patent Publication No. WO 03/080905 onto a 33.9 gsm polyester spun lace (Sontara®). Mean fiber diameter was 400 nm. The nanoweb was bonded to a 14 oz (0.4 kg) fully consolidated polyester felt (Southern Felt) by needlepunching.

Needlepunching entailed bringing the felt and the scrim + nanoweb structure together with the nanoweb on the inside against the felt and needlepunching from the felt side. Line speed was 1.5 meter/min. The number of penetrations per inch (PPI) was 383. The air permeability of the laminate was 26.1 cubic feet per minute (cfm) (0.74 m³/minute).

## Claims

1. A composite sheet comprising a first web of polymer fibers having a fiber diameter less than or equal to one micron bonded to a second web of fibers having a fiber diameter greater than one micron, wherein some of the fibers of the second web protrude through and beyond the surface of the first web of polymer fibers at a multiplicity of discontinuous regions.

2. The composite sheet of claim 1, wherein the first and second webs are bonded by needlepunching.

3. The composite sheet of claim 1, wherein a mean pore size of the composite sheet is equal to or less than the mean pore size of the combined first and second webs before bonding.

4. The composite sheet of claim 1, wherein the first web has a basis weight of at least 5 gsm.

5. The composite sheet of claim 1, further comprising a scrim located between the first web and the second web.

6. The composite sheet of claim 1, further comprising a scrim located such that the first web is between the scrim and the second web.

7. A process for bounding a polymeric nanoweb to a felt to form a composite sheet, the process comprising providing the nanoweb and the felt in a face-to-face relationship and needlepunching the felt to the nanoweb, such that some fibers from the felt protrude through and beyond the surface of the nanoweb.

8. The process of claim 7, further comprising heat treating the composite sheet.

9. The process of claim 8, wherein the heat treating comprises hot roll calendering or heating in an oven.

10. The process of claim 8, wherein heat treating is conducted at a glass transition temperature of the polymer of the nanoweb.

11. The process of claim 7, wherein the needlepunching needles have a diameter at least 500 times the average diameter of the fibers of the nanoweb.

12. The process of claim 7, wherein the needlepunching needles have a diameter at least 1000 times the average diameter of the fibers of the nanoweb.

13. The process of claim 9, wherein the heat treating method is calendering.

## Patentansprüche

1. Verbundstoffplatte, umfassend eine erste Bahn aus Polymerfasern, die einen Faserdurchmesser von weniger als oder gleich einem Mikron aufweisen und an eine zweite Bahn von Fasern bondiert sind, die einen Faserdurchmesser von mehr als einem Mikron aufweisen, wobei einige der Fasern der zweiten Bahn durch und über die Oberfläche der ersten Bahn aus Polymerfasern hinaus in einer Vielzahl von diskontinuierlichen Regionen hervorstehen.

2. Verbundstoffplatte nach Anspruch 1, wobei die erste und zweite Bahn durch Vernadeln bondiert sind.

3. Verbundstoffplatte nach Anspruch 1, wobei eine mittlere Porengröße der Verbundstoffplatte gleich oder geringer ist als die mittlere Porengröße der kombinierten ersten und zweiten Bahn vor dem Bondieren.

4. Verbundstoffplatte nach Anspruch 1, wobei die erste Bahn ein Flächengewicht von mindestens 5 g/m² aufweist.

5. Verbundstoffplatte nach Anspruch 1, des Weiteren ein Trägergewebe, das zwischen der ersten Bahn und der zweiten Bahn gelegen ist, umfassend.

6. Verbundstoffplatte nach Anspruch 1, des Weiteren ein Trägergewebe umfassend, das derart gelegen ist, dass die erste Bahn sich zwischen dem Trägergewebe und der zweiten Bahn befindet.

7. Verfahren zum Bondieren einer polymeren Nanobahn an einen Filz, um eine Verbundstoffplatte zu bilden, wobei das Verfahren Folgendes umfasst: das Bereitstellen der Nanobahn und des Filzes in einem einander gegenüberliegenden Verhältnis und das Vernadeln des Filzes an die Nanobahn, derart, dass einige Fasern aus dem Filz durch und über die Oberfläche der Nanobahn hinaus hervorstehen.

8. Verfahren nach Anspruch 7, des Weiteren das Hitzebehandeln der Verbundstoffplatte umfassend.

9. Verfahren nach Anspruch 8, wobei das Hitzebehandeln das Heißwalzkalandrieren oder Erhitzen in einem Ofen umfasst.

10. Verfahren nach Anspruch 8, wobei das Hitzebehandeln bei einer Glasübergangstemperatur des Polymers der Nanobahn durchgeführt wird.

11. Verfahren nach Anspruch 7, wobei die Vernadelungsnadeln einen Durchmesser von mindestens dem 500-Fachen des durchschnittlichen Durchmessers der Fasern der Nanobahn aufweisen.

12. Verfahren nach Anspruch 7, wobei die Vernadelungsnadeln einen Durchmesser von mindestens dem 1000-Fachen des durchschnittlichen Durchmessers der Fasern der Nanobahn aufweisen.

13. Verfahren nach Anspruch 9, wobei das Hitzebehandlungsverfahren das Kalandrieren ist.

## Revendications

1. Feuille composite comprenant un premier voile de fibres de polymère ayant un diamètre de fibres inférieur ou égal à un micron lié à un second voile de fibres ayant un diamètre de fibres supérieur à un micron, dans laquelle certaines des fibres du second voile font saillie à travers et au-delà de la surface du premier voile des fibres de polymère au niveau d'une multitude de régions discontinues.

2. Feuille composite selon la revendication 1, dans laquelle le premier et le second voiles sont liés par aiguilletage.

3. Feuille composite selon la revendication 1, dans laquelle une taille moyenne des pores de la feuille composite est égale ou inférieure à la taille moyenne des pores du premier et du second voiles combinés avant la liaison.

4. Feuille composite selon la revendication 1, dans laquelle le premier voile a un poids de base d'au moins 5 g/m².

5. Feuille composite selon la revendication 1, comprenant en outre un renfort tissé localisé entre le premier voile et le second voile.

6. Feuille composite selon la revendication 1, comprenant en outre un renfort tissé localisé de sorte que le premier voile se trouve entre le renfort tissé et le second voile.

7. Procédé de liaison d'un nanovoile polymère à un feutre pour former une feuille composite, le procédé comprenant la fourniture du nanovoile et du feutre en une relation face à face et l'aiguilletage du feutre au nanovoile, de sorte que certaines fibres provenant du feutre fassent saillie à travers et au-delà de la surface du nanovoile.

8. Procédé selon la revendication 7, comprenant en outre le traitement thermique de la feuille composite.

9. Procédé selon la revendication 8, dans lequel le traitement thermique comprend le calandrage par cylindre chaud ou le chauffage dans une étuve.

10. Procédé selon la revendication 8, dans lequel le traitement thermique est conduit à une température de transition vitreuse du polymère du nanovoile.

11. Procédé selon la revendication 7, dans lequel les aiguilles d'aiguilletage ont un diamètre d'au moins 500 fois le diamètre moyen des fibres du nanovoile.

12. Procédé selon la revendication 7, dans lequel les aiguilles d'aiguilletage ont un diamètre d'au moins 1 000 fois le diamètre moyen des fibres du nanovoile.

13. Procédé selon la revendication 9, dans lequel le procédé de traitement thermique est le calandrage.
